# FASCICULE DE BREVET EUROPEEN

(11) **EP 3 386 799 B1**
(45) Date de publication et mention de la délivrance du brevet: **08.01.2020**
(21) Numéro de dépôt: 16815890.5
(22) Date de dépôt: 28.11.2016
(51) Int. Cl.: B60Q 1/30

(54) **SYSTEME DE FEUX ARRIÈRE HOMOGÈNES POUR VÉHICULE AUTOMOBILE**
HOMOGENES RÜCKLICHTSYSTEM FÜR EIN KRAFTFAHRZEUG
HOMOGENEOUS REAR LIGHTS SYSTEM FOR A MOTOR VEHICLE

(30) Priorité: 11.12.2015 FR 1562162
(43) Date de publication de la demande: 17.10.2018
(73) Titulaire: PSA AUTOMOBILES S.A., 78300 Poissy (FR)
(72) Inventeur: SEBE, Emeric, 78390 Bois d'Arcy (FR); VIMONT, Jean-claude, 91620 La Ville du Bois (FR)
(86) Numéro de dépôt international: PCT/FR2016/053116
(87) Numéro de publication internationale: WO 2017/098109

(56) Documents cités:
- DE-A1- 10 147 584
- DE-A1-102007 029 864
- DE-A1-102013 218 152

## Description

### DOMAINE TECHNIQUE

L'invention se rapporte à un système de feux de signalisation arrière homogène pour véhicule automobile, c'est-à-dire un système de feux arrière qui fournit une signalisation de même intensité globale lorsque le coffre arrière ou le hayon du véhicule est relevé et lorsqu'il est fermé.

Sur un nombre croissant de véhicules automobiles, chaque feu arrière est partagé en deux groupes d'unités de feux adjacents et séparés par leur montage, un groupe étant monté sur le coffre arrière pouvant former un hayon (les coffres arrière ou les hayons étant appelés ci-après « volet » pour utiliser un vocable générique) selon le modèle de véhicule, et un groupe sur l'aile arrière de carrosserie du véhicule (appelée ci-après « caisse »).

Dans le domaine de l'éclairage automobile, un système de feux arrière comporte des moyens qui génèrent plusieurs niveaux d'intensité lumineuse de durée adaptée pour ces feux et fournir ainsi une signalisation, selon un codage lumineux connu, aux conducteurs des véhicules qui suivent et aux passants éventuels. Ce codage lumineux se rapporte à différentes commandes automatiques ou pilotées par le conducteur dans différentes situations, par exemple en cas de freinage (niveau d'intensité supérieur dit « feu stop » pendant la durée du freinage), de déplacement de nuit ou de faible luminosité (feux de position de niveau adapté pendant la durée correspondante), de changement de direction ou d'avertissement de détresse (feux clignotants avec un niveau supérieur ou adapté). Dans tous les cas, l'intensité lumineuse des feux arrière du véhicule n'est pas éblouissante pour les conducteurs des véhicules qui le suivent immédiatement.

Chaque niveau lumineux peut être soit réparti entre l'un et l'autre des groupes d'unités de feux respectivement de caisse et de volet de chaque feu arrière, ces groupes étant alors dédiés à des codages de signalisation différents, soit dupliqué sur les unités de feux des deux groupes de chacun des feux arrière, les groupes évoluant alors de manière synchrone et identique en intensité lumineuse.

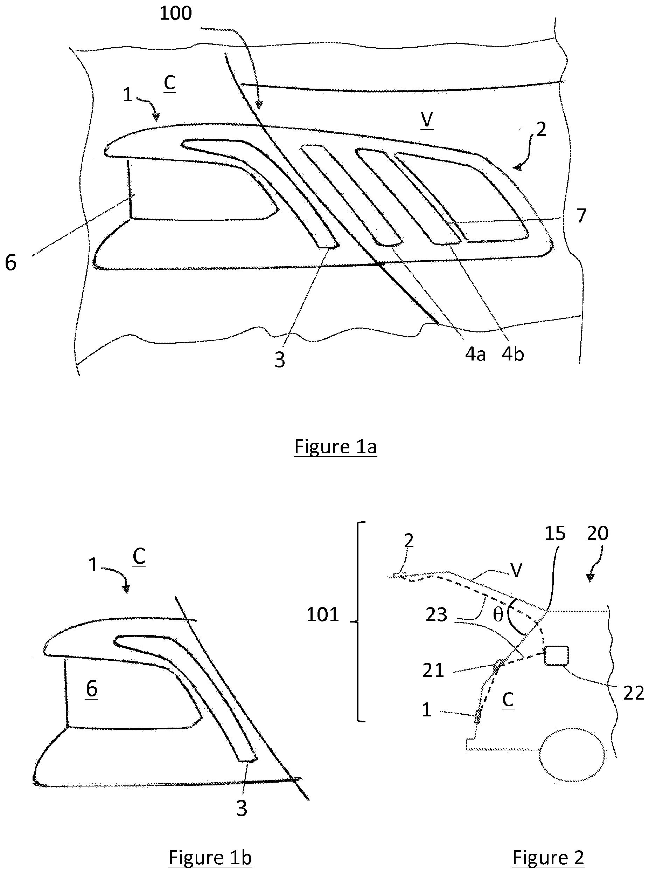

Un exemple de feu arrière 100 de véhicule automobile est présenté en référence aux figures 1a (volet fermé) et 1b (volet ouvert). Sur la figure 1a, le feu arrière 100 se partage en un groupe d'unités de feux 1 monté sur l'aile arrière de la caisse « C », et un groupe d'unités de feux 2 monté sur le volet « V » du véhicule. Un même niveau d'intensité lumineuse peut être affiché par duplication sur les trois griffes lumineuses (formant des unités de feu) du feu arrière 100 : la griffe 3 de la caisse « C », et les deux griffes 4a et 4b du volet « V ». Différents niveaux lumineux de signalisation sont affichables sur ces griffes: feux de position, feux stop ou feux clignotants. De part et d'autre de ces trois griffes 3, 4a et 4b, sont placés un catadioptre 6 et un phare de recul 7.

La figure 1b présente le groupe de feux 1 du feu arrière 100 du véhicule, seul groupe visible du feu arrière 100 (avec bien entendu le groupe identique de l'autre feu arrière situé sur l'autre aile arrière du véhicule) des véhicules ou piétons placés derrière le véhicule considéré lorsque son volet « V » est ouvert. Le cas d'un volet ouvert recouvre aussi bien le véhicule à l'arrêt et le véhicule en circulation, par exemple pour le transport d'un meuble avec un hayon ouvert. Dans ce cas, la griffe 3 prend les niveaux de luminosité prévus et commandés par le conducteur ou de manière automatique en fonction des situations évoquées ci-dessus (freinage, faible luminosité, etc.) aux fins de signalisation.

Ainsi, lorsque le volet « V » est relevé, le groupe de feux 2 est invisible et le niveau de signalisation, alors assuré par le seul groupe de feux 1 monté sur la caisse « C », s'en trouve sensiblement affaibli et risque de se trouver en-dessous du minimum requis par la législation.

### ÉTAT DE LA TECHNIQUE

Des améliorations ont été apportées à l'éclairage arrière d'un véhicule lors de l'ouverture du coffre afin de remédier à des pertes de signalisation lumineuse. Il est par exemple connu du document DE102006014561 un système d'éclairage supplémentaire installé dans un pare-chocs arrière qui s'allume à l'ouverture du coffre. Grâce à un système de miroirs, ce système permet un éclairage vers l'arrière, permettant de suppléer à l'absence de visibilité des feux de position placés sur le coffre ouvert. Mais cet éclairage est statique, d'intensité constante, et ne peut donc pas convenir à l'indication d'un freinage ou d'un changement de direction. Il n'est donc pas adapté à une situation de véhicule roulant.

Par ailleurs, le document de brevet FR2765166 présente un éclairage supplémentaire au-dessus du coffre arrière, avec un double avantage : être un témoin supplémentaire de freinage en circulation et, à l'arrêt, fournir un éclairage interne du coffre lorsque celui-ci est ouvert. Cependant, cet éclairage supplémentaire est également statique.

Ces améliorations apportées à l'éclairage arrière ne permettent pas de suppléer - avec une signalisation des feux arrière dupliquée entre deux groupes de feux (un groupe monté sur le groupe « volet » ouvrable du véhicule et un groupe monté sur le groupe fixe de caisse du véhicule) - au manque d'intensité lumineuse de cette signalisation arrière du véhicule lorsque le volet (coffre ou hayon) est relevé.

### EXPOSÉ DE L'INVENTION

L'invention vise à résoudre ce problème et, pour ce faire, prévoit d'augmenter suffisamment l'intensité lumineuse des groupes de feux arrière montés sur la caisse lorsque le volet est ouvert.

Plus précisément, la présente invention a pour objet un système de feux de signalisation arrière homogène de véhicule automobile connu du document DE102013218152 A1 et conforme au préambule de la revendication 1.

La présente invention revendique dans la partie caractérisante de sa revendication 1 qu'en cas de transmission d'un signal d'ouverture, l'organe centralisé est alors apte à fournir, à chaque groupe caisse, un signal de commande d'intensité lumineuse augmentée par rapport à l'intensité nominale dupliquée correspondant à un état de volet fermé.

De manière préférée, l'intensité lumineuse augmentée de chaque groupe caisse est sensiblement égale, pour une même signalisation, à l'intensité lumineuse du feu arrière lorsque le volet est fermé.

De plus, l'intensité lumineuse transmise à chaque groupe caisse définit une signalisation lumineuse pouvant être choisie entre une signalisation de feux de position, de feux stop, de feux de détresse, de feux clignotants, et de cumul de feux stop et de feux clignotants.

L'avantage d'un tel système est de pouvoir fournir, lorsque le volet (coffre ou hayon) est ouvert, une intensité lumineuse suffisante au groupe de feux arrière de caisse afin d'informer avec la même efficacité les automobilistes placés derrière le véhicule d'une situation actuelle ou proche de ce véhicule par une signalisation ad hoc (freinage, changement de direction, etc.). Une telle intensité lumineuse permet également de se conformer à la législation en vigueur sur un minimum d'intensité lumineuse requis.

L'invention se rapporte également à un procédé de commande de l'intensité lumineuse des feux arrière d'un système tel que défini ci-dessus. Ce procédé comporte les étapes suivantes, pour chaque signalisation lumineuse :
- définir une valeur nominale d'intensité lumineuse de chaque groupe caisse du véhicule correspondant à l'intensité de la signalisation lumineuse dupliquée de ce groupe lorsque le volet est fermé ;
- définir une valeur augmentée d'intensité lumineuse de chaque groupe caisse correspondant à l'intensité de la signalisation lumineuse dupliquée lorsque le volet est ouvert;
- déterminer en continu l'état ouverture/fermeture du volet ;
- fournir une intensité lumineuse à chaque groupe de de caisse selon sa valeur nominale lorsque le volet est fermé;
- fournir une intensité lumineuse à chaque groupe de caisse avec sa valeur augmentée lorsque le volet est ouvert.

Selon des modes de réalisation préférés :
- la valeur nominale de l'intensité lumineuse d'une signalisation de feux de position de chaque groupe de caisse est au moins égale à 2 Cd;
- la valeur augmentée de l'intensité lumineuse d'une signalisation donnée est égale, pour chaque groupe de caisse, à une valeur nominale globale de l'intensité lumineuse de l'ensemble du feu arrière auquel appartient ce groupe;
- alternativement, la valeur augmentée de l'intensité lumineuse d'une signalisation de feux de position de chaque groupe de caisse est au moins égale à 4 Cd;

L'invention se rapporte également à un véhicule automobile comportant au moins un système de feux arrière de signalisation dont les intensités lumineuses de signalisation sont définies selon le procédé de l'invention.

Dans le présent texte, les qualificatifs « vertical » et « horizontal » se rapportent aux localisations d'éléments par rapport à un véhicule en utilisation standard. Sur les figures accompagnant ce texte, des éléments identiques sont repérés par un même signe de référence et renvoient au(x) passage(s) qui le décrive(nt).

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1a, un système de feux arrière partagé sur une caisse et un volet, dans le cas du volet fermé (déjà commentée);
- la figure 1b, un système de feux arrière partagé sur une caisse et un volet, dans le cas du volet ouvert (déjà commentée);
- la figure 2, une vue latérale d'une partie arrière de véhicule muni d'un exemple de système de feux de signalisation arrière selon l'invention;
- les figures 3a et 3b, un exemple schématique de partage dupliqué de signalisation de feu arrière d'un véhicule entre trois unités de feu à bande d'éclairage vertical, un groupe réduit à une unité monté sur la caisse (figure 3a) et un groupe de deux unités monté sur le volet (figure 3b) du véhicule;
- les figures 4a et 4b, un exemple schématique de partage dupliqué de signalisation de feu arrière d'un véhicule entre six unités de feu à bande d'éclairage horizontale, un groupe de trois unités monté sur la caisse (figure 4a) et un groupe de trois unités monté sur le volet (figure 4b) du véhicule ; et
- la figure 5, un exemple de logigramme d'étapes du procédé de commande de l'intensité lumineuse des feux arrière selon l'invention.

### DESCRIPTION DÉTAILLÉE

La vue latérale de figure 2 présente un arrière de véhicule 20 comportant un exemple de feux arrière d'un système de signalisation arrière 101. Le feu arrière est partagé en deux groupes de feux, un groupe de feux «caisse » 1 monté sur la caisse « C » du véhicule, et un groupe « volet » 2 monté sur le hayon « V ». Le hayon « V » étant ouvert, la vue latérale permet de distinguer dans l'espace les deux groupes de feux arrière 1 et 2.

La duplication d'intensité des signalisations lumineuses des groupes de feux caisse 1 et de volet 2 dépend d'un signal binaire d'ouverture/fermeture fournie par un capteur 21 de position du volet « V » de la manière suivante. Ce signal est communiqué de manière périodique à un organe central de commande 22, un BSI (Boitier de Servitude Intelligent) dans l'exemple illustré. Un réseau électrique multiplexé 23 relie tous les éléments du système 101 pour transmettre la donnée d'ouverture/fermeture du hayon « V » au BSI 22 et des signaux de commande d'intensité lumineuse du BSI aux groupes de feux arrière 1 et 2. Le réseau électrique 23, les groupes de feu arrière 1 et 2, le capteur 21 et le BSI 22 forment un exemple de système de feux de signalisation arrière 101 selon l'invention.

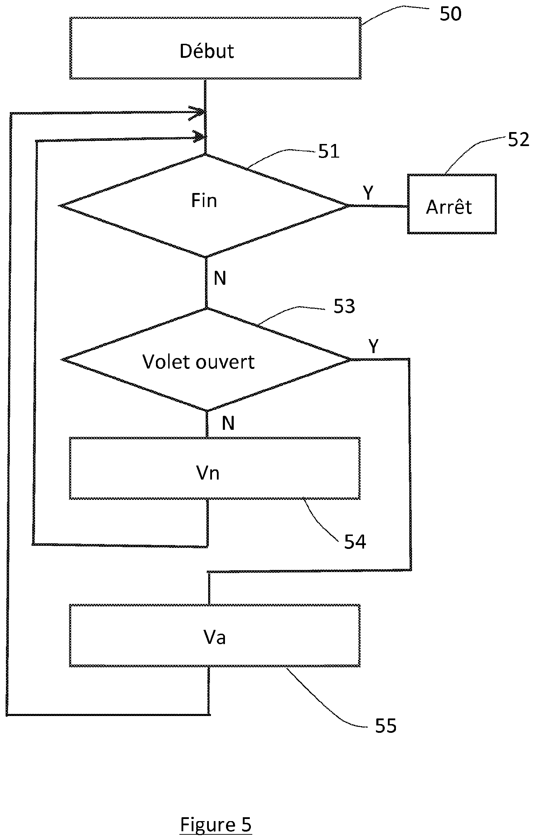

Lorsque le capteur 21 transmet un signal d'ouverture du hayon « V », le BSI 22 rompt la duplication d'intensité entre les deux groupes de feux 1 et 2, en émettant un signal de commande d'augmentation d'intensité lumineuse du groupe de feux caisse 1. Pour une même signalisation, l'intensité lumineuse du groupe caisse 1 passe ainsi d'une valeur nominale Vₙ à une valeur augmentée Vₐ (cf. figure 5) qui atteint, dans cet exemple, la valeur de l'intensité lumineuse de l'ensemble des deux groupes de feux 1 et 2 lorsque le volet « V » est fermé. Plus généralement, les valeurs augmentées utilisées permettent de fournir une intensité lumineuse qui reste toujours supérieure, lorsque le volet est ouvert, au minimum d'intensité prévue par la réglementation.

Alternativement, la valeur augmentée peut être inférieure ou supérieure à la valeur augmentée Vₐ définie ci-dessus, en fonction par exemple du niveau de luminosité de l'environnement fourni par un détecteur (non représenté) en liaison avec le BSI 22 du véhicule 20.

Avantageusement, le capteur d'ouverture/fermeture 21 est réglé pour déclencher une donnée d'ouverture lorsque le volet « V » est suffisamment ouvert, en particulier pour le transport d'un objet de volume important. Dans l'exemple, lorsque l'angle d'ouverture θ du hayon « V » autour de la charnière 15 dépasse une valeur seuil de 30° par rapport à sa position fermée, le signal de donnée d'ouverture est déclenché.

En variante, pour une signalisation donnée, l'intensité lumineuse de chaque groupe caisse 1 est adaptée de manière continue, par tout circuit connu (convertisseur, potentiomètre, etc.) en liaison avec le BSI, entre la valeur Vₙ et la valeur Vₐ en fonction de la luminosité de l'environnement et/ou de l'angle d'ouverture du hayon « V ».

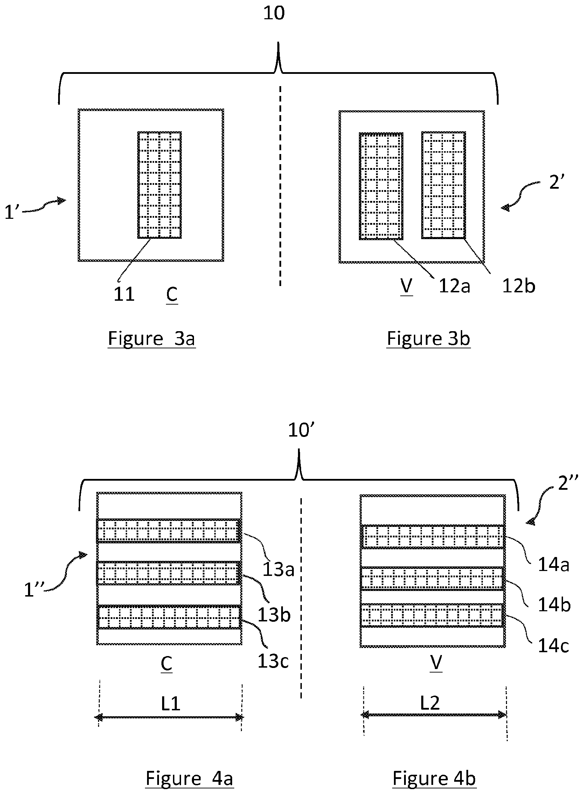

Les figures 3a et 3b présentent schématiquement un exemple de partage d'un feu arrière 10 en deux groupes de feux caisse 1' et de volet 2', pouvant être montés respectivement sur la caisse « C » et le volet « V » du véhicule 20 de la figure 2. Le feu arrière 10 est composé de trois unités lumineuses à diodes électroluminescentes ou LED formées d'une bande verticale 11 montée sur la caisse « C » et de deux bandes 12a et 12b montées sur le volet « V ». L'ensemble des bandes 11, 12a, 12b fournissent une intensité lumineuse de valeurs nominales globales « Vng » dupliquées sur les groupes 1' et 2' correspondant à des signalisations lumineuses codées pour informer les conducteurs des véhicules qui suivent. Dans cet exemple, pour un feu arrière à trois bandes: signalisation de feux de position (Vng = 8 Cd), de feux stop (Vng = 40 Cd), de feux de clignotement (Vng = 10 Cd), ou de feux de détresse Vng = 40 Cd), ou encore de feux de recul.

Dans le cas où le volet 2 est fermé, chaque bande verticale 11, 12a et 12b reçoit la même intensité lumineuse. Lorsque le volet 2 est remonté, la bande 11 de la caisse « C » est éclairée avec une intensité lumineuse de valeur augmentée Va, ce qui permet de remédier à l'insuffisance de la valeur nominale d'intensité lumineuse de la bande 11 lorsque, par exemple, l'intensité lumineuse globale des trois bandes verticales 11, 12a et 12b correspond à l'intensité minimum de la règlementation.

Les figures 4a et 4b présentent schématiquement un autre exemple de partage d'un feu arrière 10' sur la caisse « C » et le volet « V » du véhicule 20 (figure 2) en deux groupes de feux caisse 1' et volet 2". Chaque groupe de feux 1" et 2" est composé d'unités d'éclairage à LED d'un même type, formées de trois bandes horizontales identiques et référencées respectivement 13a à 13c et 14a à 14c.

Lorsque l'intensité lumineuse de chaque bande 13a à 13c et 14a à 14c est nominale pour une signalisation donnée (de valeur nominale globale sur les trois bandes Vng = 8 Cd pour des feux de position dans cet exemple), l'intensité lumineuse de la signalisation est dupliquée entre les deux groupes de feux 1" et 2" c'est-à-dire identique pour l'ensemble des groupes de feux de caisse 1" et de volet 2". L'intensité lumineuse de chaque bande 13a à 13c et 14a à 14c dépend de la longueur de ces bandes à largeur égale, et si les longueurs L1 et L2 sont identiques, l'intensité lumineuse nominale de chaque groupe feux 1 " ou 2" est identique, et vaut dans cet exemple pour un feu de position: 8/2 Cd = 4 Cd.

La figure 5 présente un exemple de logigramme d'étapes du procédé selon l'invention pour la commande de l'intensité lumineuse de feux arrière du véhicule 20 (cf. figure 2). Dans l'étape de début 50, des valeurs d'intensité lumineuse nominales Vn des groupes de feux arrière de caisse 1' ou 1" et de volet 2' et 2", et des valeurs augmentées Va des groupes de feux de caisse 1' ou 1 " sont définies. Des valeurs nominales Vn et augmentées Va sont choisies pour chaque signalisation de feux de position, feux stop, feux clignotants, feux de détresse et/ou feux de recul.

Puis un test de fin d'utilisation du véhicule est introduit à l'étape 51. Dans le cas où le véhicule s'arrête (réponse « Y »), le procédé s'arrête également (étape 52). Si le véhicule n'est pas arrêté (réponse « N »), le procédé passe au test de « volet ouvert » (étape 53) qui est levé par le signal d'ouverture/fermeture du volet du capteur 21 (cf. figure 2). Ce test oriente le choix des intensités élaboré par le BSI : si le volet est fermé (réponse « N »), la valeur nominale Vₙ des intensités lumineuses de la signalisation à fournir est sélectionnée pour les groupes de feux de caisse et de volet (étape 54); si le volet est ouvert (réponse « Y »), la valeur augmentée Vₐ de l'intensité lumineuse des groupes de feux de caisse est sélectionnée (étape 55). Dans les deux cas, le procédé est ensuite rebouclé en sortie des étapes 54 et 55 à l'étape test 51 du début.

Ainsi l'état lumineux de la signalisation des groupes caisse de feux arrière 1 ou 1' présente une intensité lumineuse suffisante au regard de la réglementation, que le volet « V » soit fermé ou relevé, et quelle que soit la signalisation prévue.

L'invention n'est pas limitée aux exemples de réalisation décrits et représentés. Ainsi, le signal d'ouverture/fermeture du volet peut être un signal binaire numérique ou analogique, avec une émission périodique ou continue.

De plus, on entend par détecteur d'ouverture tout moyen, capteur par exemple, de détection d'ouverture, par contact électrique, optique ou mécanique.

Par ailleurs, les valeurs nominales Vn des groupes de feux caisse et volet sont comprises respectivement entre 4 et 40 Cd et entre 2 et 40 Cd. La valeur augmentée de l'intensité lumineuse des groupes de feux caisse pour une signalisation donnée, en particulier pour des feux clignotants ou des feux stop, est égale à l'intensité lumineuse de la valeur nominale de l'ensemble du feu arrière de ce groupe.

En outre, la valeur Vx d'intensité lumineuse des groupes volet peut varier entre Vn lorsque le volet est fermé, à la valeur Va des groupes caisse lorsque le volet est ouvert. Dans ce dernier cas, la valeur Vx peut aussi être à zéro afin de réduire la consommation électrique des feux.

## Revendications

1. Système de feux de signalisation arrière (101) homogène de véhicule automobile, chaque feu étant apte à être monté dans un angle arrière du véhicule présentant une caisse de carrosserie (C) et un volet (V) arrière ouvrable, ce système comportant deux groupes d'unités de feux pour chaque feu arrière (10, 10'), un groupe de feux « caisse » (1, 1', 1") destiné à être monté sur la caisse (C) et un groupe de feux « volet » (2, 2', 2") destiné à être monté sur le volet (V), ainsi qu'un organe centralisé (22) de commande d'intensité lumineuse émise par les feux arrière (10, 10') du véhicule, cet organe (22) distribuant au moins une intensité lumineuse de manière dupliquée entre les deux groupes de feux arrière (1, 1', 1" ; 2, 2', 2") correspondant à une signalisation lumineuse, ledit système comportant également un détecteur d'ouverture (21) du volet (V) apte à transmettre un signal d'information d'ouverture/fermeture du volet (V) à l'organe centralisé (22) de commande d'intensité lumineuse, **caractérisé en ce qu'**en cas de transmission d'un signal d'ouverture, l'organe centralisé (22) de commande d'intensité lumineuse est alors apte à fournir, à chaque groupe caisse (1, 1', 1"), un signal de commande d'intensité lumineuse augmentée (Va) par rapport à l'intensité nominale (Vn) dupliquée correspondant à un état de volet (V) fermé.

2. Système de feux de signalisation (101) selon la revendication 1, dans lequel l'intensité lumineuse augmentée (Va) de chaque groupe caisse (1, 1', 1") est sensiblement égale, pour une même signalisation, à l'intensité lumineuse du feu arrière (10, 10') lorsque le volet (V) est fermé.

3. Système de feux de signalisation (101) selon l'une quelconque des revendications 1 ou 2, dans lequel l'intensité lumineuse transmise à chaque groupe caisse (1, 1', 1") définit une signalisation lumineuse pouvant être choisie entre une signalisation de feux de position, de feux stop, de feux de détresse, de feux clignotants, et de cumul de feux stop et de feux clignotants.

4. Procédé de commande de l'intensité lumineuse des feux arrière d'un système tel que défini selon l'une quelconque des revendications 1 à 3, comportant les étapes suivantes, pour chaque signalisation lumineuse : :
- définir une valeur nominale (Vn) d'intensité lumineuse de chaque groupe caisse (1, 1', 1") du véhicule correspondant à l'intensité de la signalisation lumineuse dupliquée de ce groupe (1, 1', 1") lorsque le volet (V) est fermé ;
- définir une valeur augmentée (Va) d'intensité lumineuse de chaque groupe caisse (1, 1', 1") correspondant à l'intensité de la signalisation lumineuse dupliquée lorsque le volet (V) est ouvert;
- déterminer en continu l'état ouverture/fermeture du volet (V);
- fournir une intensité lumineuse à chaque groupe de caisse (1, 1', 1") selon sa valeur nominale (Vn) lorsque le volet (V) est fermé;
- fournir une intensité lumineuse à chaque groupe de caisse (1, 1', 1") avec sa valeur augmentée (Va) lorsque le volet (V) est ouvert.

5. Procédé de commande d'intensité lumineuse selon la revendication précédente, dans lequel. la valeur nominale de l'intensité lumineuse d'une signalisation de feux de position de chaque groupe de caisse (1, 1', 1") est au moins égale à 2 Cd.

6. Procédé de commande d'intensité lumineuse selon l'une quelconque des revendications 4 à 5, dans lequel la valeur augmentée (Va) de l'intensité lumineuse d'une signalisation donnée est égale, pour chaque groupe de caisse (1, 1', 1"), à une valeur nominale globale de l'intensité lumineuse de l'ensemble du feu arrière (10, 10') auquel appartient ce groupe (1, 1', 1").

7. Procédé de commande d'intensité lumineuse selon l'une quelconque des revendications 4 à 6, dans lequel la valeur augmentée (Va) de l'intensité lumineuse d'une signalisation de feux de position de chaque groupe de caisse (1, 1', 1") est au moins égale à 4 Cd.

8. Véhicule automobile comportant au moins un système de feux arrière de signalisation (101) selon l'une quelconque des revendications 1 à 3 dont les intensités lumineuses de signalisation sont définies selon le procédé selon l'une quelconque des revendications 4 à 7.

## Patentansprüche

1. Homogenes Rücklichtsystem (101) für ein Kraftfahrzeug, wobei jedes Licht geeignet ist, in einem hinteren Winkel des Fahrzeugs, das einen Fahrzeugaufbau (C) und eine öffnende Heckklappe (V) aufweist, montiert zu sein, wobei dieses System zwei Gruppen aus Lichteinheiten für jedes Licht (10, 10') umfasst, eine Gruppe aus "Fahrzeugaufbau"-Lichtern (1, 1', 1"), die dazu bestimmt ist, auf dem Fahrzeugaufbau (C) montiert zu sein, und eine Gruppe aus "Klappen"-Lichtern (2, 2', 2"), die dazu bestimmt ist, auf der Klappe (V) montiert zu sein, sowie ein zentrales Organ (22) zur Steuerung der Leuchtstärke, die von den Rücklichtern (10, 10') des Fahrzeugs abgegeben wird, wobei dieses Organ (22) mindestens eine Leuchtstärke auf duplizierte Art zwischen den zwei Rücklichtgruppen (1, 1', 1"; 2, 2' 2") verteilt, die einer Leuchtsignalgebung entspricht, wobei das System auch einen Öffnungsdetektor (21) der Klappe (V) umfasst, der geeignet ist, ein Öffnungs-/Schließinformationssignal der Klappe (V) zu dem zentralen Organ (22) zur Steuerung der Leuchtstärke zu übertragen, **dadurch gekennzeichnet, dass** im Fall einer Öffnungssignalübertragung das zentrale Organ (22) zur Steuerung der Leuchtstärke geeignet ist, um jeder Fahrzeugaufbaugruppe (1, 1', 1") ein Leuchtstärkesteuersignal (Va), das im Vergleich zu der duplizierten Nennleuchtstärke (Vn) erhöht ist, das einem geschlossenen Zustand der Klappe (V) entspricht, zu liefern.

2. Rücklichtsystem (101) nach Anspruch 1, wobei die erhöhte Leuchtstärke (Va) jeder Fahrzeugaufbaugruppe (1, 1', 1") für eine selbe Signalgebung im Wesentlichen gleich der Leuchtstärke des Rücklichts (10, 10'), wenn die Klappe (V) geschlossen ist, ist.

3. Rücklichtsystem (101) nach einem der Ansprüche 1 oder 2, wobei die Leuchtstärke, die zu jeder Fahrzeugaufbaugruppe (1, 1', 1") übertragen wird, eine Leuchtsignalisierung definiert, die aus einer Signalisierung von Standlichtern, Stopplichtern, Warnblinklichtern, Blinklichtern und Summierung von Stopplichtern und Blinklichtern ausgewählt werden kann.

4. Verfahren zum Steuern der Leuchtstärke der Rücklichter eines Systems wie nach einem der Ansprüche 1 bis 3 definiert, das die folgenden Schritte für jede Leuchtsignalisierung umfasst:
- Definieren eines Leuchtstärkenennwerts (Vn) jeder Fahrzeugaufbaugruppe (1, 1', 1") des Fahrzeugs, der der duplizierten Leuchtsignalisierungsstärke dieser Gruppe (1, 1', 1") entspricht, wenn die Klappe (V) geschlossen ist;
- Definieren eines Leuchtstärkennennwerts (Va) jeder Fahrzeugaufbaugruppe (1, 1', 1"), der der duplizierten Leuchtsignalisierungsstärke, wenn die Klappe (V) offen ist, entspricht;
- kontinuierliches Bestimmen des Öffnungs-/Schließzustands der Klappe (V);
- Liefern einer Leuchtstärke zu jeder Fahrzeugaufbaugruppe (1, 1', 1") gemäß ihrem Nennwert (Vn), wenn die Klappe (V) geschlossen ist;
- Liefern einer Leuchtstärke zu jeder Fahrzeugaufbaugruppe (1, 1', 1") mit ihrem erhöhten Wert (Va), wenn die Klappe (V) offen ist.

5. Verfahren zur Steuerung der Leuchtstärke nach dem vorstehenden Anspruch, wobei der Nennwert der Leuchtstärke einer Standlichtsignalisierung jeder Fahrzeugaufbaugruppe (1, 1', 1") mindestens 2 Cd beträgt.

6. Verfahren zur Steuerung der Leuchtstärke nach einem der Ansprüche 4 bis 5, wobei der erhöhte Wert (Va) der Leuchtstärke einer gegebenen Signalisierung für jede Fahrzeugaufbaugruppe (1, 1', 1") gleich einem globalen Nennwert der Leuchtstärke sämtlicher Rücklichter (10, 10'), zu welchen diese Gruppe (1, 1', 1") gehört, ist.

7. Verfahren zur Steuerung der Leuchtstärke nach einem der Ansprüche 4 bis 6, wobei der erhöhte Wert (Va) der Standlichtsignalisierung jeder Fahrzeugaufbaugruppe (1, 1', 1") mindestens gleich 4 Cd ist.

8. Kraftfahrzeug, das mindestens ein Rücklichtsystem (101) nach einem der Ansprüche 1 bis 3 umfasst, dessen Signalisierungsleuchtstärken gemäß dem Verfahren nach einem der Ansprüche 4 bis 7 definiert sind.

## Claims

1. A homogeneous rear signal lights system (101) of a motor vehicle, each light being able to be mounted in a rear corner of the vehicle having a body shell (C) and an openable rear hatch (V), this system comprising two groups of units of lights for each rear light (10, 10'), a group of "shell" lights (1, 1', 1") intended to be mounted on the shell (C) and a group of "hatch" lights (2, 2', 2") intended to be mounted on the hatch (V), as well as a centralised member (22) for controlling the light intensity emitted by the rear lights (10, 10') of the vehicle, this member (22) distributing at least one light intensity in a replicated manner between the two groups of rear lights (1, 1', 1"; 2, 2', 2") corresponding to a light signal, said system also comprising a sensor (21) for detecting the opening of the hatch (V), which is able to transmit an information signal relating to the opening/closing of the hatch (V) to the centralised member (22) for controlling the light intensity, **characterized in that** in the event of transmission of an opening signal, the centralised member (22) for controlling the light intensity is then able to supply, to each shell group (1, 1', 1"), a signal for controlling increased light intensity (Va) in relation to the replicated nominal intensity (Vn) corresponding to a closed state of the hatch (V).

2. The signal lights system (101) according to Claim 1, in which the increased light intensity (Va) of each shell group (1, 1', 1") is substantially equal, for the same signalling, to the light intensity of the rear light (10, 10') when the hatch (V) is closed.

3. The signal lights system (101) according to any one of Claims 1 or 2, in which the light intensity transmitted to each shell group (1, 1', 1") defines a light signalling being able to be selected between a signalling of position lights, of stop lights, of hazard lights, of flashing lights, and of an aggregation of stop lights and flashing lights.

4. A method for controlling the light intensity of the rear lights of a system as defined according to any one of Claims 1 to 3, comprising the following steps, for each light signal:
- defining a nominal value (Vn) of light intensity of each shell group (1, 1', 1") of the vehicle corresponding to the replicated intensity of the light signal of this group (1, 1', 1") when the hatch (V) is closed;
- defining an increased value (Va) of light intensity of each shell group (1, 1', 1") corresponding to the replicated intensity of the light signal when the hatch (V) is open;
- determining continuously the state of opening/closing of the hatch (V);
- providing a light intensity to each shell group (1, 1', 1") according to its nominal value (Vn) when the hatch (V) is closed;
- providing a light intensity to each shell group (1, 1', 1") with its increased value (Va) when the hatch (V) is open.

5. The method for controlling light intensity according to the preceding claim, in which the nominal value of the light intensity of a signal of position lights of each shell group (1, 1', 1") is at least equal to 2 Cd.

6. The method for controlling light intensity according to any one of Claims 4 to 5, in which the increased value (Va) of light intensity of a given signal is equal, for each shell group (1, 1', 1"), to an overall nominal value of light intensity of the whole of the rear light (10, 10') to which this group (1, 1', 1") belongs.

7. The method for controlling light intensity according to any one of Claims 4 to 6, in which the increased value (Va) of the light intensity of a signal of position lights of each shell group (1, 1', 1") is at least equal to 4 Cd.

8. A motor vehicle comprising at least one rear signal lights system (101) according to any one of Claims 1 to 3, the signal light intensities of which are defined according to the method according to any one of Claims 4 to 7.
